(19) Europäisches Patentamt

European Patent Office

Office européen des brevets

(11) **EP 1 210 571 B1**

(12) **EUROPÄISCHE PATENTSCHRIFT**

(45) Veröffentlichungstag und Bekanntmachung des Hinweises auf die Patenterteilung:
**20.04.2005  Patentblatt 2005/16**

(21) Anmeldenummer: **00965942.6**

(22) Anmeldetag: **07.09.2000**

(51) Int Cl.⁷: $G01L\ 1/20$, $G01D\ 5/252$, $G08C\ 19/34$

(86) Internationale Anmeldenummer:
**PCT/EP2000/008756**

(87) Internationale Veröffentlichungsnummer:
**WO 2001/018515 (15.03.2001 Gazette 2001/11)**

(54) **SENSOREINRICHTUNG ZUR ABFRAGE EINER SENSOREINRICHTUNG**

SENSOR DEVICE FOR INTERROGATING A SENSOR DEVICE

DISPOSITIF DE DETECTION POUR INTERROGER UN DISPOSITIF DE DETECTION

(84) Benannte Vertragsstaaten:
**AT BE CH CY DE DK ES FI FR GB GR IE IT LI LU MC NL PT SE**

(30) Priorität: **08.09.1999  LU 90437**

(43) Veröffentlichungstag der Anmeldung:
**05.06.2002  Patentblatt 2002/23**

(73) Patentinhaber: **IEE INTERNATIONAL ELECTRONICS & ENGINEERING S.A.**
**6468 Echternach (LU)**

(72) Erfinder: **THINNES, Martin**
**54311 Trierweiler (DE)**

(74) Vertreter: **Beissel, Jean et al**
**Office Ernest T. Freylinger S.A.,**
**234, route d'Arlon,**
**B.P. 48**
**8001 Strassen (LU)**

(56) Entgegenhaltungen:
**DE-A- 19 625 730          US-A- 4 673 933**
**US-A- 5 668 544**

**Beschreibung**

*Einleitung*

Die vorliegende Erfindung betrifft eine Sensoreinrichtung mit mehreren Sensoren mit variablem Widerstand in Matrix-Verschaltung.

Zur Abfrage, d.h. Auslesen von Sensorelementen mit variablem Widerstand, wie z.B. druckabhängigen oder temperaturabhängigen Widerständen, wird an das Sensorelement eine elektrische Testspannung angelegt und der aufgrund der angelegten Spannung fließende Strom gemessen. Auf diese Wiese läßt sich der momentane elektrische Widerstand des Sensorelements errechnen und daraus die zu messende Größe (Druck, Temperatur etc.) ermitteln.

Eine Sensoreinrichtung mit drucksensiblen Sensoren kann zum Beispiel in einer Sitzbelegungserkennung zur Steuerung eines aktiven Passagierrückhaltesystems in einem Fahrzeug angewandt werden, wie z.B. offenbart in DE 19 625 730. Eine solche Sensormatte umfaßt mehrere individuelle drucksensible Sensoren, die über die Fläche des Passagiersitzes verteilt in den Sitz integriert sind. Die Sensoren sind an ein Auswertegerät angeschlossen, das den Auslösezuand der einzelnen Sensoren überprüft. Ist der Sitz durch eine Person belegt, werden mehrere der Sensoren aufgrund der durch eine Person auf den Sitz ausgeübten Gewichtskraft ausgelöst, ein Zustand der von der angeschlossenen Auswerteschaltung als Belegungszustand des Sitzes erkannt und an die Airbagsteuerung weitergegeben wird.

Um die Sensoren selektiv abfragen zu können, muß im Prinzip jeder der Sensoren an die Auswerteschaltung angeschlossen werden. Um hierbei die Zahl der Anschlußleitungen zu reduzieren, ist es vorteilhaft die einzelnen Sensoren in einer Matrix-Verschaltung zu betreiben. Dies bedeutet, daß bei einer Anzahl von $n*m$ Sensorelementen, im wesentlichen n Zeilenleiter und m Spaltenleiter vorgesehen sind, wobei zwischen jeweils einem Zeilenleiter und einem Spaltenleiter eines der Sensorelemente verschaltet ist.

Es ist anzumerken, daß eine solche Matrix-Verschaltung eine schaltungstechnische Anordnung darstellt. Das heißt, daß eine Matrix-Verschaltung in einer realen Anordnung weder voraussetzt, daß die Sensorelemente in einer regelmäßigen Gitterverteilung angeordnet sein müssen, noch daß die einzelnen Verbindungsleiter geradlinig und parallel bzw. senkrecht zueinander verlaufen müssen.

Zum Auswerten einer Sensoranordnung in Matrix-Verschaltung wird folgendermaßen vorgegangen. Zunächst legt man die gesamte Matrix-Verschattung mit Ausnahme eines ersten Spaltenleiters auf das gleiche Potential, z.B. auf Masse. An den ersten Spaltenleiter wird nun eine Testspannung angelegt und anschließend selektiv der an den einzelnen Zeilenleitern abfließende Strom gemessen. Auf diese Weise kann man selektiv die Widerstandswerte der zwischen dem ersten Spaltenleiter und den verschiedenen Zeilenleitern verschalteten Sensorelementen ermitteln. Wird diese Vorgehensweise für jeden der Spaltenleiter wiederholt, kann man sämtliche Sensorelemente nacheinander selektiv ausmessen. Es ist hier anzumerken, daß man alternativ die einzelnen Zeilenleiter mit der Testspannung beaufschlagen und den über die Sensorelemente abfließenden Strom an den Spaltenleitern messen kann um die einzelnen Sensorelemente abzufragen.

Möchte man bei einer derartigen Sensormatte die Zahl der Sensoren erhöhen, muß im allgemeinen auch die Zahl der Anschlußleitungen erhöht werden. Dies bedeutet, daß z.B. eine Erweiterung der $(n \times m)$-Matrix zu einer $((n+1) \times m)$-Matrix die Einführung eines weiteren Zeilenleiters bedingt, um die hinzugefügten Sensoren in die Matrix-Verschattung einzubinden.

In der Praxis ist eine derartige Erhöhung der Zahl der Verbindungsleiter allerdings mit Problemen verbunden. Zum einen bereitet eine große Zahl von Leiterbahnen Schwierigkeiten bei der Gestaltung der Form der Sensormatte. In der Tat sind z.B. die einzelnen Sensoren in einem Sitzbelegungssensor in einer Sandwichstruktur aus zwei Trägerfolien und einem Abstandhalter angeordnet, die einerseits ein zusammenhängendes Ganzes bilden muß, andererseits aber eine möglichst geringe Flächendeckung aufweist, um den Sitzkomfort nicht zu beeinträchtigen. Die einzelnen Sensoren sind daher lediglich durch schmale Stege der Sandwichstruktur untereinander verbunden, durch die auch die Anschlußleitungen der Sensoren verlaufen müssen. Eine Erhöhung der Zahl der benötigten Verbindungsleiter erschwert die Verlegung der einzelnen Leiter durch die schmalen Verbindungsstege, bzw. bedingt eine Verbreiterung der Verbindungsstege, was zu einer Erhöhten Spürbarkeit einer derartigen Sensormatte in dem Fahrzeugsitz führt.

Andererseits setzt eine Erhöhung der Zahl der Verbindungsleiter voraus, daß die Auswerteschaltung eine entsprechende Zahl von Ein- bzw. Ausgängen aufweist. Jeder Zeilenleiter und jeder Spaltenleiter muß in der Tat mit der Auswerteschaltung verschaltet werden, um entweder die Beaufschlagung des jeweiligen Leiters mit einer geeigneten Testspannung oder die Messung des über den Leiter abfließenden Stromes zu ermöglichen. Eine Erhöhte Zahl der Verbindungsleiter führt demnach zu einer komplizierteren und damit teureren Answerteschaltung.

*Aufgabe der Erfindung*

Aufgabe der vorliegenden Erfindung ist es folglich, eine Sensoreinrichtung vorzuschlagen, die bei gleichbleibender Zahl der Anschlußleitungen, eine erhöhte Zahl von Sensoren aufweist.

### Allgemeine Beschreibung der Erfindung

Diese Aufgabe wird durch eine Sensoreinrichtung gemäß Anspruch 1 oder 2 gelöst. Eine solche Sensoreinrichtung umfaßt $i$ Sensorelemente eines ersten Typs, die in einer schaltungstechnischen ($n$ x $m$)-Matrix-Verschaltung mit $n$ Zeilenleitern und $m$ Spaltenleitern verschaltet sind, wobei $i$, $n$ und $m$ natürliche Zahlen verschieden von Null sind und wobei $1 \leq i \leq n*m$. Es ist anzumerken, daß eine solche Matrix-Verschaltung eine schaltungstechnische Anordnung darstellt. Das heißt, daß eine Matrix-Verschaltung in einer realen Anordnung weder voraussetzt, daß die Sensorelemente in einer regelmäßigen Gitterverteilung angeordnet sein müssen, noch daß die einzelnen Verbindungsleiter geradlinig und parallel bzw. senkrecht zueinander verlaufen müssen. Jedes der $i$ Sensorelemente ist dabei zwischen jeweils einem Zeilenleiter und einem Spaltenleiter verschaltet,

Erfindungsgemäß weist die Sensoreinrichtung $j$ zusätzliche Sensorelemente eines zweiten Typs auf, wobei $j$ eine natürliche Zahl verschieden von Null ist und wobei jedes der $j$ zusätzlichen Sensorelemente des zweiten Typs zwischen jeweils zwei Zeilenleitern verschaltet ist. Alternativ weist die Sensoreinrichtung $k$ zusätzliche Sensorelemente eines zweiten Typs auf, wobei $k$ eine natürliche Zahl verschieden von Null ist und wobei jedes der $k$ zusätzlichen Sensorelemente des zweiten Typs zwischen jeweils zwei Spaltenleitern verschaltet ist.

Die erfindungsgemäße Vorrichtung umfaßt also neben den in der üblichen und bekannten Matrix-Verschaltung verschalteten Sensorelemente einen oder mehrere weitere Sensoren, die zwischen jeweils zwei Zeilenleiter oder zwischen jeweils zwei Spaltenleiter verschaltet sind. In beiden Fällen ist ein individuelles Abfragen der zusätzlichen Sensorelemente möglich, ohne daß hierfür zusätzliche Verbindungsleitungen in die Sensoreinrichtung eingebracht werden müssen. Der Begriff Verbindungsleitungen bezeichnet hier lediglich Zeiten- bzw. Spaltenleiter, die aus der Sensoreinrichtung herausgeführt und direkt an die Auswerteschaltung angeschlossen werden müssen. Dieser Begriff ist demnach nicht auf die Leiterbahnen anzuwenden, mit denen die zusätzlichen Sensorelemente an die jeweiligen Zeilen- bzw. Spaltenleiter angeschlossen sind.

Zum individuellen Auswerten der aus der herkömmlichen Matrix-Verschaltung bekannten Sensorelemente wird auf die gleiche Art vorgegangen, wie bei einer bekannten Matrix-Verschaltung. Dazu legt man zunächst die gesamte Matrix-Verschaltung mit Ausnahme eines ersten Spaltenleiters auf das gleiche Potential, z.B. auf Masse. An den ersten Spaltenleiter wird nun eine Testspannung angelegt und anschließend selektiv der an den einzelnen Zeilenleitern abfließende Strom gemessen. Auf diese Weise kann man selektiv die Widerstandswerte der zwischen dem ersten Spaltenleiter und den verschiedenen Zeilenleitern verschalteten Sensorelementen ermitteln. Wird diese Vorgehensweise für jeden der Spaltenleiter wiederholt, kann man sämtliche Sensorelemente nacheinander selektiv ausmessen. Es ist hier anzumerken, daß man alternativ die einzelnen Zeilenleiter mit der Testspannung beaufschlagen und den über die Sensorelemente abfließenden Strom an den Spaltenleitern messen kann um die einzelnen Sensorelemente abzufragen. Bei dieser Vorgehensweise stören die zusätzlichen Sensorelemente die Abfrage der bekannten Sensorelemente nicht, da sie bedingt durch das Meßverfahren an beiden Anschlußpunkten auf gleicher Spannung liegen und somit nicht in das Meßergebnis eingehen.

Zum Auslesen der zusätzlichen zwischen jeweils zwei Spaltenleiter verschalteten Sensorelemente wird ein analoges Verfahren angewandt. Hierbei wird zunächst die gesamte Matrix-Verschaltung mit Ausnahme eines ersten Spaltenleiters auf das gleiche Potential, z.B. auf Masse gelegt. An den ersten Spaltenleiter wird nun eine Testspannung angelegt und anschließend selektiv der an anderen Spaltenleitern abfließende Strom gemessen. Auf diese Weise kann man selektiv die Widerstandswerte der zwischen dem ersten Spaltenleiter und den jeweils anderen Spaltenleitern verschalteten Sensorelementen ermitteln. Wird diese Vorgehensweise für jeden der Spaltenleiter wiederholt, kann man sämtliche derart verschalteten Sensorelemente nacheinander selektiv ausmessen. Zum Auslesen der zwischen jeweils zwei Zeilenleitem verschalteten zusätzlichen Sensorelemente geht man analog vor. Es ist wiederum anzumerken, daß die in der herkömmlichen Matrix-Verschaltung angeordneten Sensorelemente das Meßergebnis der zusätzlichen Sensorelemente nicht beeinflussen, da sie bedingt durch das Meßverfahren an beiden Anschlußpunkten auf gleicher Spannung liegen und somit nicht in das Meßergebnis eingehen.

Der Vorteil der erfindungsgemäßen Anordnung besteht somit darin, ohne zusätzliche Leitungen zusätzliche Sensorelemente messen zu können und dabei zugleich das bekannte Meßverfahren der Matrixelemente in den Kreuzungspunkten von Zeilen- und Spaltenleiter nicht zu stören. Bestehende Auswerteschaltungen können also ohne Modifikation mit der erweiterten Sensoranordnung eingesetzt werden, die Erweiterung wird zwar dann nicht genutzt, stört aber den normalen Betrieb nicht.

Bei allen oben beschriebenen Meßschritten erfolgt die Ansteuerung der Spalten und Zeile entweder direkt über Treiber und Verstärkerschaltungen an jeder Zeile und Spalte oder über einzelne Treiber und Meßverstärker, die über einen Multiplexer auf die zu messenden oder anzusteuernden Zeilen bzw. Spalten aufgeschaltet werden. In einer besonders vorteilhaften Ausgestaltung umfaßt eine Vorrichtung zum Abfragen der Sensorelemente n+m Ansteuervorrichtungen, die an die n Zeilenleiter und an die m Spaltenleiter anschließbar sind, wobei jede Ansteuervorrichtung derart individuell umschaltbar ausgestaltet ist, daß sie in einem ersten Modus als Treiberzelle zum Beaufschlagen des anzuschließenden Zeilen- bzw. Spaltenleiters mit einer elektrischen Treibspannung und in einem zweiten Modus als Meßwandler zum Verarbeiten des Signals an dem anzuschließenden Spalten- bzw. Zeilenleiter arbeitet. Eine derartige Auswerteschaltung ermöglicht eine besonders flexible Ansteuerung der einzelnen Zeilen- bzw. Spaltenleiter, die es ermöglicht, sowohl zwischen jeweils einem Zeilenleiter und einem Spaltenleiter als auch zwischen jeweils zwei Zeilenleitern oder zwei Spaltenleitern zu messen.

In einer besonders vorteilhaften Ausgestaltung der Sensoreinrichtung umfaßt die Einrichtung $j + k$ zusätzliche Sensorelemente eines zweiten Typs, wobei $j$ und $k$ jeweils eine natürliche Zahl verschieden von Null ist und wobei jedes der zusätzlichen Sensorelemente des zweiten Typs zwischen jeweils zwei Spaltenleitern oder jeweils zwei Zeilenleitern verschaltet ist. Durch Erweiterung der herkömmlichen Sensormatrix in beiden Dimensionen, d.h. sowohl zwischen Zeilenleitem als auch zwischen Spaltenleitern, kann die Zahl der mit der gleichen Anzahl von Verbindungsleitungen abzufragender Sensorelemente optimiert werden. Maximal können auf diese Weise zwischen den $n$ Zeilenleitern $\frac{n*(n-1)}{2}$ und zwischen den $m$ Spaltenleitern $\frac{m*(m-1)}{2}$ zusätzliche

Sensorelemente verschaltet werden. Der Fachmann kann hieraus ohne Probleme ersehen, daß je nach Anwendung und Bedarf auch weniger zusätzliche Sensorelemente in die bekannte Matrix-Verschaltung eingebracht werden können.

Es ist anzumerken, daß die Sensorelemente des ersten Typs und die Sensorelemente des zweiten Typs derart ausgestaltet sein können, daß sie in der Sensoreinrichtung eine identische Funktion erfüllen. Die unterschiedlichen Sensorelemente können hierzu beispielsweise identisch ausgeführt sein. Alternativ kann die gleiche Funktion, z.B. eine Druckmessung, der beiden Typen von Sensorelementen auch mit einer unterschiedlichen Bauform erreicht werden. Bei einer Sensormatte mit sogenannten Foliendrucksensoren können die Sensorelemente des ersten Typs beispielsweise derart ausgestaltet sein, daß sie in einem Durchgangsmodus, dem sogenannten "trough mode", funktionieren, während die Sensorelemente des zweiten Typs in einem Kurzschlußmodus, dem sogenannten "shunt mode" arbeiten.

Bei Foliendrucksensoren, die im Durchgangsmodus arbeiten, ist ein erstes Kontaktelement auf einer ersten Trägerfolie und ein zweites Kontaktelement auf einer zweiten Trägerfolie angeordnet, wobei die beiden Trägerfolien in einem gewissen Abstand derart zueinander angeordnet sind, daß sich die beiden Kontaktelemente gegenüberstehen. Zwischen den beiden Kontaktelementen ist eine Schicht aus einem Halbleitermaterial angeordnet, die beim Auslösen des Sensors gegen die beiden Kontaktelemente gepreßt wird wobei der Widerstand zwischen den beiden Kontaktelementen je nach Anpreßdruck variiert. Ein solcher Sensortyp eignet sich besonders gut für die Herstellung von Sensormatten, da bei dieser Ausgestaltung die Zeilenleiter auf die eine Trägerfolie aufgedruckt werden, während die Spaltenleiter auf der anderen Trägerfolie angeordnet werden können. Durch diese Anordnung der unterschiedlichen Verbindungsbahnen auf verschiedenen Trägerfolien ergeben sich keine Probleme an den Kreuzungspunkten der verschiedenen Verbindungsleiter, da diese in verschiedenen Ebenen verlaufen.

Foliendrucksensoren in Kurzschlußmodus weisen zwei Kontaktelemente auf, die auf einer ersten Trägerfolie in einem bestimmten Absatz zueinander angeordnet sind. Auf einer zweiten beabstandeten Trägerfolie ist eine Halbleiterschicht derart angebracht, daß sie den Bereich zwischen den beiden Kontaktelementen überdeckt und die beiden Kontaktelemente beim Zusammenpressen der Trägerfolien kontaktiert. Diese Art von Sensoren eignet sich folglich besonders gut als Ausgestaltung für die zusätzlichen Sensorelemente, da die beiden Kontaktelemente auf einer Trägerfolie aufgebracht sind und daher leicht mit den auf dieser Trägerfolie verlaufenden Zeilen- bzw. Spaltenleiter kontaktiert werden können.

In einer vorteilhaften Ausgestaltung der Sensoreinrichtung ist mindestens eines der Sensorelemente des zweiten Typs derart ausgestaltet, daß das mindestens eine Sensorelement des zweiten Typs in der Sensoreinrichtung eine Funktion erfüllt, die von der Funktion der Sensorelemente des ersten Typs unterschiedlich ist. Ein solches Sensorelement mit unterschiedlicher Funktion kann beispielsweise eine Überwachung und/oder eine Kompensation von Umwelteinflüssen zulassen. In eine bekannte Sensoreinrichtung in Matrix-Verschaltung können auf diese Art mehrere Kompensationselemente eingebrachte werden, die es erlauben z.B. Temperatureinflüsse zu kompensieren ohne die Auflösung der ursprünglichen Sensormatrix zu verschlechtern.

Es ist anzumerken, daß von den zusätzlichen Sensorelementen einige die gleiche Funktion erfüllen können wie die i regulären Sensorelemente, während andere zusätzliche Sensorelemente eine unterschiedliche Funktion in der Sensoreinrichtung verrichten.

### Beschreibung anhand der Figuren

Im folgenden werden verschiedene Ausgestaltungen der Erfindung anhand der beiliegenden Figuren beschrieben. Es zeigen:

Fig.1:   eine Sensoreinrichtung in Matrix-Verschaltung mit zusätzlichen, zwischen den Zeilenleitern verschalteten Sensorelementen;

Fig.2:   eine Sensoreinrichtung in Matrix-Verschaltung mit zusätzlichen, zwischen den Spaltenleitern verschalteten Sensorelementen;

Fig.3:   eine vorteilhafte Schaltung zum Abfragen einer Sensoreinrichtung mit zusätzlichen Sensorelementen.

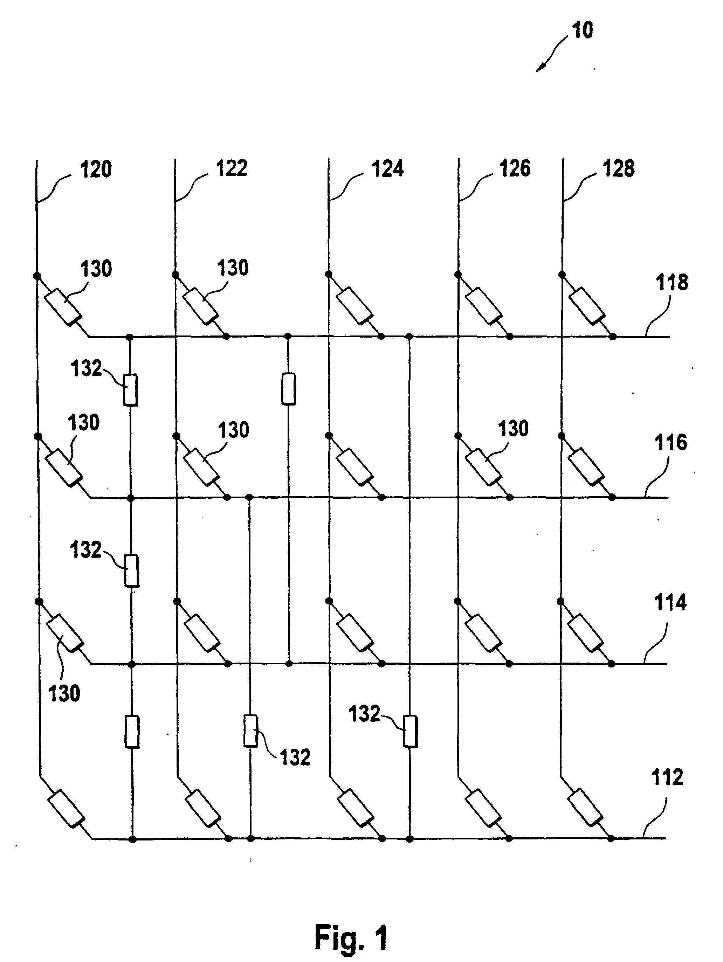

In Fig. 1 ist eine erste Ausgestaltung einer verbesserten Sensoranordnung dargestellt. Die Sensoranordnung 10 weist mehrere Zeilenleiter 112, 114, 116, 118 sowie mehrere Spaltenleiter 120, 122, 124, 126, 128 auf; es handelt sich bei der dargestellten Ausführung also um eine (4 x 5)-Matrix-Verschaltung. An den Kreuzungspunkten zwischen jeweils einem der Zeilenleiter 112, 114, 116, 118 und einem der Spaltenleiter 120, 122, 124, 126, 128 sind in bekannter Weise (als Widerstand dargestellte) Sensorelemente 130 zwischen die jeweiligen Zeilen- und Spaltenleiter verschaltet. Bei der vorliegendem (4 x 5)-Matrix-Verschaltung können auf diese Weise 4*5=20 Sensorelemente 130 verschaltet werden. Diese Sensorelemente 130 können beispielsweise druck- oder temperaturabhängige Widerstände umfassen.

Bei der vorliegenden Sensoranordnung 10 sind zusätzlich zu den Sensorelementen 130 weitere Sensorelemente 132 vorhanden, die jeweils zwischen zwei Zeilenleitern 112, 114, 116, 118 verschaltet sind. Zwischen jedem Zeilenpaar 112-114, 112-116, 112-118, 114-116, 114-118, 116-188 kann dabei ein zusätzliches individuell abfragbares Sensorelement 132 verschaltet werden. In der gezeigten Konfiguration mit vier Zeilenleitern können somit maximal sechs zusätzliche, individuell abfragbare Sensorelemente 132 eingebracht werden. Es kann vom Fachmann leicht nachgeprüft werden, daß die maximale Zahl $j_{max}$ der zusätzlichen Sensorelemente 132 der Formel $j_{max} = \frac{n*(n-1)}{2}$ gehorcht, wobei $n$ die Zahl der vorhandenen Zeilenleiter darstellt.

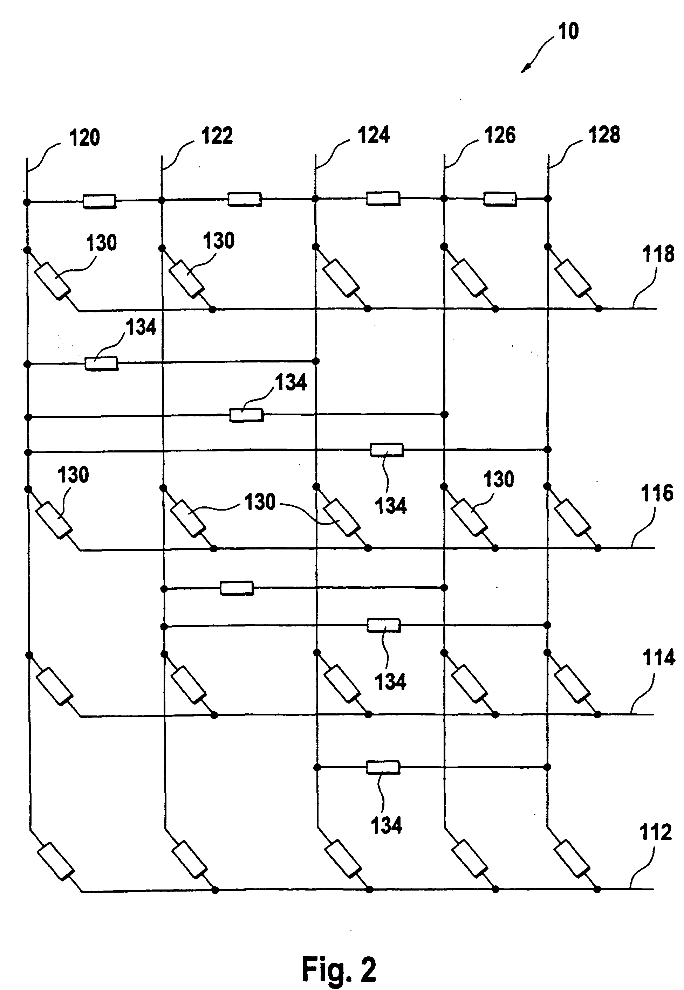

Die in Fig. 2 dargestellte Sensoranordnung ist im wesentlichen analog zu der in Fig. 1 dargestellten Anordnung zu verstehen. Im Unterschied zu der oben beschriebenen Ausgestaltung, sind bei dieser Ausgestaltung zusätzliche Sensorelemente 134 zwischen den Spaltenleitern 120, 122, 124, 126, 128 verschaltet. Zwischen jedem Spaltenpaar 120-122, 120-124, 120-126, 120-128, 122-124, 122-126, 122-128, 124-126, 124-128, 126-128 kann dabei ein zusätzliches individuell abfragbares Sensorelement 134 verschaltet werden. In der gezeigten Konfiguration mit fünf Spaltenleitern können somit maximal zehn zusätzliche, individuell abfragbare Sensorelemente 134 eingebracht werden. Es kann vom Fachmann leicht nachgeprüft werden, daß die maximale Zahl $k_{max}$ der zusätzlichen Sensorelemente 134 der Formel $k_{max} = \frac{m*(m-1)}{2}$ gehorcht, wobei $m$ die Zahl der vorhandenen Spaltenleiter darstellt.

Es ist anzumerken, daß zur optimalen Ausnutzung des Verschaltungspotentials der vorhandenen Zeilen- und Spaltenleiter zusätzliche Sensorelemente in beiden Dimensionen in die Matrix-Verschaltung eingebracht werden können. Eine solche Ausgestaltung der Sensoreinrichtung stellt im wesentlichen eine Kombination der beiden Ausgestaltungen der Fig. 1 und Fig. 2 dar. Die maximale Anzahl der derart zusätzlich in die bekannte Matrix-Verschaltung eingebrachten, individuell abfragbaren Sensorelemente 132, 134 beträgt somit

$$j_{max} + k_{max} = \frac{n*(n-1)}{2} + \frac{m*(m-1)}{2}.$$

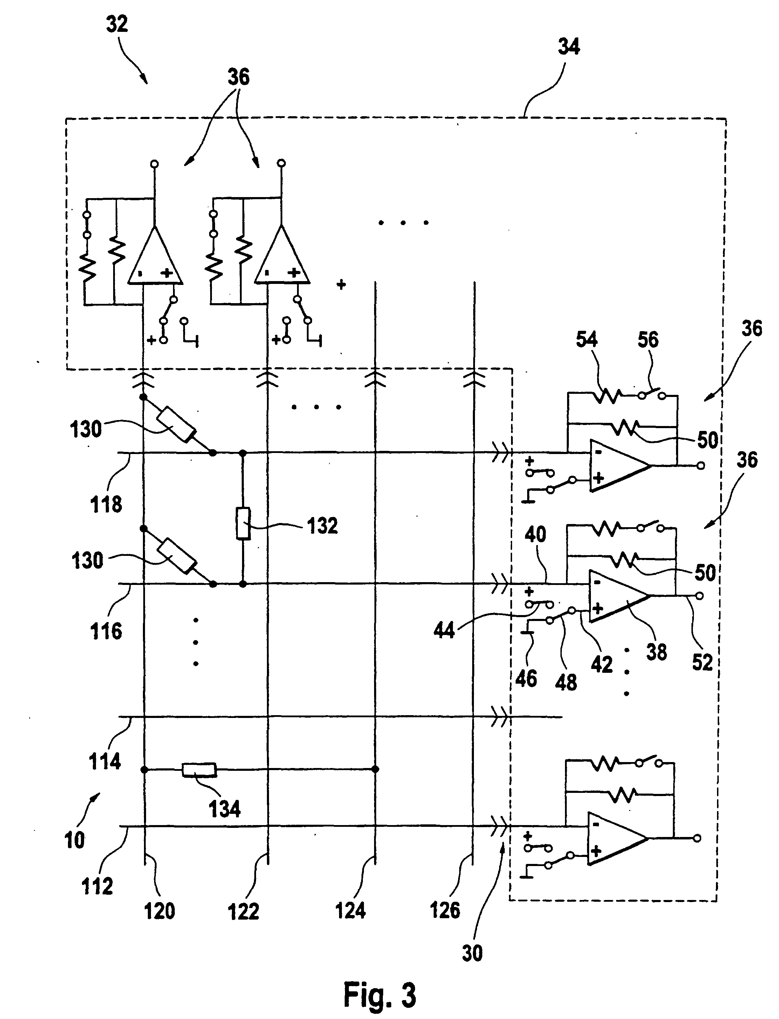

In der Fig. 3 ist eine vorteilhafte Anordnung zum Abfragen der oben beschriebenen Sensoreinrichtungen gezeigt. Die eigentliche Sensoranordnung 10 (hier eine (4 x 4)-Matrix) ist hier nur unvollständig gezeigt; zur besseren Übersichtlichkeit der Figur sind lediglich zwei Sensorelemente 130 und jeweils ein zusätzliches Sensorelement 132 und 134 eingezeichnet, es ist jedoch für den Fachmann klar, daß entsprechende Sensorelemente 130, 132, 134 vorteilhaft auch zwischen den anderen Spalten- und Zeilenleitern bzw. zwischen den jeweiligen Zeilenleitern und/oder zwischen den jeweiligen Spaltenleitern verschaltet sind.

Die Sensoranordnung 10 ist über eine Steckoder Klemmverbindung 30 mit der Vorrichtung 32 zum Abfragen der Sensorelemente verbunden. Diese umfaßt mehrere, vorzugsweise in einem gemeinsamen Gehäuse 34 angeordnete, Ansteuervorrichtungen 36, von denen jede über die Steck- oder Klemmverbindung 30 an jeweils einen Zeilen- bzw. Spaltenleiter 12-18, 20-26 anschließbar ist. Zur besseren Übersichtlichkeit der Figur sind auch hier lediglich einige der Ansteuervorrichtungen 36 dargestellt.

Jede Ansteuervorrichtung 36 umfaßt einen gegengekoppelten Operationsverstärker 38, dessen invertierender Eingang 40 an den jeweiligen Zeilen- bzw. Spaltenleiter 12-18, 20-26 anschließbar ist und dessen nicht-invertierender Eingang 42 zwischen einem Anschluß 44 einer Treiberspannung und einem Anschluß 46 eines Referenzpotentials umschaltbar ist. Die Umschaltung geschieht dabei vorzugsweise über einen elektronisch gesteuerten Schalter 48. Das Referenzpotential stellt eine virtuelle Masse dar, deren Potential zwischen der realen Masse und der Versorgungsspannung der Schaltung liegt, z.B. beider halben Versorgungsspannung.

Bei dieser Ausgestaltung nutzt man das Prinzip aus, daß ein solcher gegengekoppelter Operationsverstärker 38 versucht, die Spannungsdifferenz zwischen dem invertierenden und dem nicht invertierenden Eingang zu Null zu machen. Soll eine bestimmte Ansteuervorrichtung 36 demnach als Treiberzelle arbeiten, z.B. die an den Spaltenleiter 20 angeschlossene Ansteuervorrichtung, schaltet man den nicht-invertierenden Eingang 40 des jeweiligen Operationsverstärkers 38 auf den Anschluß 44 der Treiberspannung. Der Operationsverstärker 38 treibt dann über den Gegenkopplungswiderstand 50 die an dem invertierenden Eingang 40 angeschlossene Spalte 20.

Zum Abfragen der zwischen dem Spaltenleiter 120 und den verschiedenen Zeilenleitern 112-118 verschalteten Sensorelementen 130 müssen die restlichen Spaltenleiter 122-126 und die Zeilenleiter 112-118 auf das Referenzpotential gelegt werden. Hierzu werden die nicht-invertierenden Eingänge 42 der entsprechenden Operationsverstärker 38 auf den Anschluß 46 für die Referenzspannung geschaltet. Diese Operationsverstärker 38 arbeiten dann als Strom-Spannungswandler, die den über die jeweils angeschlossene Zeile bzw. Spalte fließenden Strom, d.h. den Strom, der über das zu messende Sensorelement 130 abfließt, in eine dem Widerstand des Sensorelements proportionale Ausgangsspannung am Ausgang 52 des Operationsverstärkers umwandelt.

Der Widerstandswert der Gegenkopplung der einzelnen Operationsverstärker 38 ist vorzugsweise veränderbar. Dies geschieht in der dargestellten Ausgestaltung durch einen zweiten Gegenkopplungswiderstand 54, der mittels eines elektronisch gesteuerten Schalters 56 zu dem ersten Gegenkopplungswiderstand 50 parallel hinzugeschaltet werden kann. Hierdurch läßt sich vorteilhaft die Meßempfindlichkeit der als Meßwandler geschalteten Ansteuervorrichtungen 36 verändern, so daß eine hohe Genauigkeit bei der Messung erreicht wird. Weiterhin läßt sich mit den variablen Gegenkopplungswiderständen an den als Treiberzellen geschalteten Ansteuervorrichtungen der in die Sensoranordnung 10 hineinfließende Strom regeln.

Mit der vorgestellten Vorrichtung zum Abfragen mehrerer Sensorelemente ist ein möglicher Meßablauf wie folgt:

Zunächst legt man alle Zeilen- und Spaltenleiter durch Aufschalten der nicht-invertierenden Eingänge 42 der Operationsverstärker 38 auf den jeweiligen Anschluß 46 auf das Referenzpotential, d.h. die virtuelle Masse. Die Sensoranordnung 10 ist jetzt unbestromt im Ruhezustand.

Zum Beginn des Meßzyklus wir an einer Spalte 120 der nicht-invertierende Eingang 42 des Operationsverstärkers 38 mit dem Anschluß 44 der Treiberspannung beschaltet. Jetzt können alle Widerstandswerte der zwischen dem Spaltenleiter 120 und den verschiedenen Zeilenleitern 112-118 verschalteten Sensorelemente 130 nacheinander bestimmt werden.

Anschließend wird der nicht-invertierende Eingang 42 des an den Spaltenleiter 120 angeschlossenen Operationsverstärkers 38 wieder auf das Referenzpotential geschaltet und die nächste Spalte 122 angesteuert. Auf diese Weise werden alle Spalten nacheinander abgearbeitet, anschließend werden analog die zwischen den Zeilenleitern verschalteten Sensorelemente 132 und die zwischen den Spaltenleitern verschalteten Sensorelemente 134 ausgelesen. Am Ende eines solchen Meßzyklus sind dann die Widerstandswerte sämtlicher Sensorelemente 130, 132 und 134 bestimmt. In einem zweiten Meßzyklus können dann, nach Verändern der Gegenkopplungswiderstände an den Operationsverstärkern 38, beispielsweise sämtliche Sensorelemente in einem anderen Meßbereich abgefragt werden. Durch Vergleich der beiden gemessenen Widerstandswerte können bereits Rückschlüsse auf Defekte in der Matrix gezogen werden.

**Patentansprüche**

1. Sensoreinrichtung (10) umfassend i Sensorelemente (130) eines ersten Typs, wobei die i Sensorelemente (130) in einer schaltungstechnischen ($n$ x $m$)-Matrix-Verschaltung mit $n$ Zeilenleitern (112, 114, 116, 118) und $m$ Spaltenleitern (120, 122, 124, 126, 128) verschaltet sind, wobei $i$, $n$ und $m$ natürliche Zahlen verschieden von Null sind und wobei $1 \leq i \leq n * m$, wobei jedes der $i$ Sensorelemente (130) zwischen jeweils einem Zeilenleiter (112, 114, 116, 118) und einem Spaltenleiter (120, 122, 124, 126, 128) verschaltet ist, **gekennzeichnet durch** $j$ zusätzliche Sensorelemente (132) eines zweiten Typs, wobei $j$ eine natürliche Zahl verschieden von Null ist und wobei jedes der $j$ zusätzlichen Sensorelemente (132) des zweiten Typs zwischen jeweils zwei Zeilenleitern (112, 114, 116, 118) verschaltet ist.

2. Sensoreinrichtung (10) umfassend $i$ Sensorelemente (130) eines ersten Typs, wobei die $i$ Sensorelemente (130) in einer schaltungstechnischen ($n$ x $m$)-Matrix-Verschaltung mit $n$ Zeilenleitern (112, 114, 116, 118) und $m$ Spaltenleitem (120, 122, 124, 126, 128) verschaltet sind, wobei $i$, $n$ und $m$ natürliche Zahlen verschieden von Null sind und wobei $1 \leq i \leq n*m$, wobei jedes der $i$ Sensorelemente (130) zwischen jeweils einem Zeilenleiter (112, 114, 116, 118) und einem Spaltenleiter (120, 122, 124, 126, 128) verschaltet ist, **gekennzeichnet durch** $k$ zusätzliche Sensorelemente (134) eines zweiten Typs, wobei $k$ eine natürliche Zahl verschieden von Null ist und wobei jedes der $k$ zusätzlichen Sensorelemente (134) des zweiten Typs zwischen jeweils zwei Spaltenleitern (120, 122, 124, 126, 128) verschaltet ist.

3. Sensoreinrichtung nach Anspruch 1, **gekennzeichnet durch** $k$ zusätzliche Sensorelemente (134) eines zweiten Typs, wobei k eine natürliche Zahl verschieden von Null ist und wobei jedes der k zusätzlichen Sensoreiemente (134) des zweiten Typs zwischen jeweils zwei Spaltenleitern (120, 122, 124, 126, 128) verschaltet ist.

4. Sensoreinrichtung nach Anspruch 1 oder 3, **dadurch gekennzeichnet, daß**

$$1 \leq j \leq \frac{n*(n\text{-}1)}{2}.$$

5. Sensoreinrichtung nach Anspruch 2 oder 3, **dadurch gekennzeichnet, daß**

$$1 \leq k \leq \frac{m*(m\text{-}1)}{2}.$$

**6.** Sensoreinrichtung nach einem der vorhergehenden Ansprüche, **dadurch gekennzeichnet, daß** die Sensorelemente (130) des ersten Typs und die Sensorelemente (132, 134) des zweiten Typs derart ausgestaltet sind, daß sie in der Sensoreinrichtung eine identische Funktion erfüllen.

**7.** Sensoreinrichtung nach einem der vorhergehenden Ansprüche, **dadurch gekennzeichnet, daß** mindestens eines der Sensorelemente (132, 134) des zweiten Typs derart ausgestaltet ist, daß das mindestens eine Sensorelement (132, 134) des zweiten Typs in der Sensoreinrichtung eine Funktion erfüllt, die von der Funktion der Sensorelemente (130) des ersten Typs unterschiedlich ist.

**8.** Vorrichtung zum Abfragen einer Sensoreinrichtung (10) nach einem der vorhergehenden Ansprüche, **gekennzeichnet durch** n+m Ansteuervorrichtungen (36), die an die n Zeilenleiter (112, 114, 116, 118) und an die m Spaltenleiter (120, 122, 124, 126, 128) anschließbar sind, wobei jede Ansteuervorrichtung (36) derart individuell umschaltbar ausgestaltet ist, daß sie in einem ersten Modus als Treiberzelle zum Beaufschlagen des anzuschließenden Zeilen- bzw. Spaltenleiters mit einer elektrischen Treibspannung und in einem zweiten Modus als Meßwandler zum Verarbeiten des Signals an dem anzuschließenden Spalten- bzw. Zeilenleiter arbeitet.

**Claims**

**1.** Sensor device (10) comprising $i$ sensor elements (130) of a first type, the $i$ sensor elements (130) being connected in a circuitry (n x m) matrix array with n row conductors (112, 114, 116 and 118) and m column conductors (120, 122, 124, 126 and 128), where $i$, $n$ and $m$ are natural numbers other than zero, and where $1 \leq i \leq n^* m$ , wherein each of the $i$ sensor elements (130) is connected between one row conductor (112, 114, 116 or 118) and one column conductor (120, 122, 124, 126 or 128), **characterised by** $j$ additional sensor elements (132) of a second type, where $j$ is a natural number other than zero, and wherein each of the j additional sensor elements (132) of the second type is connected between two of the row conductors (112, 114, 116 and 118).

**2.** Sensor device (10) comprising i sensor elements (130) of a first type, the $i$ sensor elements (130) being connected in a circuitry ($n$ x $m$) matrix array with $n$ row conductors (112, 114, 116 and 118) and $m$ column conductors (120, 122, 124, 126 and 128), where $i$, $n$ and $m$ are natural numbers other than zero, and where $1 \leq i \leq n^* m$, wherein each of the $i$ sensor elements (130) is connected between one row conductor (112, 114, 116 or 118) and one column conductor (120, 122, 124, 126 or 128), **characterised by** $k$ additional sensor elements (134) of a second type, where k is a natural number other than zero, and wherein each of the $k$ additional sensor elements (134) of the second type is connected between two of the column conductors (120, 122, 124, 126 and 128).

**3.** Sensor device according to claim 1, **characterised by** $k$ additional sensor elements (134) of a second type, where k is a natural number other than zero, and where each of the k additional sensor elements (134) of the second type is connected between two column conductors (120, 122, 124, 126 and 128).

**4.** Sensor device according to claims 1 or 3, **characterised in that**

$$1 \leq j \leq \frac{n^*(n\text{-}1)}{2}.$$

**5.** Sensor device according to claims 2 or 3, **characterised in that**

$$1 \leq k \leq \frac{m^*(m\text{-}1)}{2}.$$

**6.** Sensor device according to one of the previous claims, **characterised in that** the sensor elements (130) of the first type and the sensor elements (132 and 134) of the second type are designed in such a way that they perform an identical function in the sensor device.

**7.** Sensor device according to one of the previous claims, **characterised in that** at least one of the sensor elements (132 and 134) of the second type is designed in such a way that the at least one sensor element (132 and 134) of the second type performs a function in the sensor device which differs from the function performed by the sensor elements (130) of the first type.

**8.** Device used to interrogate a sensor device (10) according to one of the previous claims, **characterised by** n+m control devices (36) which can be connected to the n row conductors (112, 114, 116 and 118) and the m column conductors (120, 122, 124, 126 and 128), each control device (36) being designed to be individually switchable in such a way that in a first mode it operates as a driver cell for applying an electrical test voltage to the row or column conductor to be connected, and in a second mode it operates as a measuring transformer for processing the signal at the column or row conductor which is to be connected.

**Revendications**

1. Dispositif de détection (10) comprenant i éléments de détection (130) d'un premier type, les i éléments de détection (130) étant connectés dans une connexion en matrice (n x m) au sens de la technique des circuits, avec n conducteurs en lignes (112, 114, 116, 118) et m conducteurs en colonnes (120, 122, 124, 126, 128), i, n et m étant des nombres naturels différents de zéro et $1 \leq i \leq n^*m$, chacun des i éléments de détection (130) étant connecté entre respectivement un conducteur en ligne (112, 114, 116, 118) et un conducteur en colonne (120, 122, 124, 126, 128), **caractérisé par** j éléments de détection additionnels (132) d'un deuxième type, j étant un nombre naturel différent de zéro et chacun des j éléments de détection additionnels (132) du deuxième type étant connecté entre respectivement deux conducteurs en lignes (112, 114, 116, 118).

2. Dispositif de détection (10) comprenant i éléments de détection (130) d'un premier type, les i éléments de détection (130) étant connectés dans une connexion en matrice (n x m) au sens de la technique des circuits, avec n conducteurs en lignes (112, 114, 116, 118) et m conducteurs en colonnes (120, 122, 124, 126, 128), i, n et m étant des nombres naturels différents de zéro et $1 \leq i \leq n^*m$, chacun des i éléments de détection (130) étant connecté entre respectivement un conducteur en ligne (112, 114, 116, 118) et un conducteur en colonne (120, 122, 124, 126, 128), **caractérisé par** k éléments de détection additionnels (134) d'un deuxième type, k étant un nombre naturel différent de zéro et chacun des k éléments de détection additionnels (134) du deuxième type étant connecté entre respectivement deux conducteurs en colonnes (120, 122, 124, 126, 128).

3. Dispositif de détection selon la revendication 1, **caractérisé par** k éléments de détection additionnels (134) d'un deuxième type, k étant un nombre naturel différent de zéro et chacun des k éléments de détection additionnels (134) du deuxième type étant connecté entre respectivement deux conducteurs en colonnes (120, 122, 124, 126, 128).

4. Dispositif de détection selon la revendication 1 ou 3, **caractérisé en ce que**

$$1 \leq j \leq \frac{n^*(n\text{-}1)}{2}.$$

5. Dispositif de détection selon la revendication 2 ou 3, **caractérisé en ce que**

$$1 \leq k \leq \frac{m^*(m\text{-}1)}{2}.$$

6. Dispositif de détection selon l'une des revendications précédentes, **caractérisé en ce que** les éléments de détection (130) du premier type et les éléments de détection (132, 134) du deuxième type sont réalisés de manière telle qu'ils remplissent une fonction identique dans le dispositif de détection.

7. Dispositif de détection selon l'une des revendications précédentes, **caractérisé en ce que** au moins l'un des éléments de détection (132, 134) du deuxième type est réalisé de manière telle que l'au moins un élément de détection (132, 134) du deuxième type remplit, dans le dispositif de détection, une fonction différente de la fonction des éléments de détection (130) du premier type.

8. Dispositif permettant d'interroger un dispositif de détection (10) selon l'une des revendications précédentes, **caractérisé par** n+m dispositifs de commande (36) qui peuvent être raccordés aux n conducteurs en lignes (112, 114, 116, 118) et aux m conducteurs en colonnes (120, 122, 124, 126, 128), chaque dispositif de commande (36) étant réalisé de manière commutable individuellement de telle manière qu'il opère dans un premier mode en tant que cellule d'attaque servant à appliquer une tension électrique d'attaque au conducteur en ligne resp. en colonne à raccorder et, dans un deuxième mode, en tant que convertisseur de mesure pour traiter le signal au niveau du conducteur en colonne resp. en ligne à raccorder.

**Fig. 1**

**Fig. 2**

**Fig. 3**